# EUROPÄISCHE PATENTANMELDUNG

(11) **EP 4 706 468 A1**
(43) Veröffentlichungstag der Anmeldung: **11.03.2026**
(21) Anmeldenummer: 25188940.8
(22) Anmeldetag: 11.07.2025
(51) Int. Cl.: A47J 31/52, A47J 31/44

(54) **VERFAHREN ZUM ÜBERWACHEN DER ZUBEREITUNG VON MILCHSCHAUM ODER HEISSMILCH IN EINER KAFFEEMASCHINE**

(30) Priorität: 04.09.2024 DE 102024208402
(71) Anmelder: BSH Hausgeräte GmbH, 81739 München (DE)
(72) Erfinder: Garschhammer, Florian, 83349 Palling (DE); Henz, Manuel, 83410 Laufen (DE); Huber, Lukas, 83329 Waging am See (DE); Gallinger, Simon, 83301 Traunreut (DE)

(57) **Zusammenfassung**

Die vorliegende Erfindung betrifft ein Verfahren zum Überwachen einer Zubereitung (Z) von Milchschaum (MS) oder Heißmilch (HM) in einer Kaffeemaschine (1), wobei sich die Zubereitung (Z) über einen Zubereitungszeitraum (T) hinweg erstreckt. Gemäß dem Verfahren wird die Zubereitung (Z) über einen Teil-Zeitraum (TZR) des gesamten Zubereitungszeitraums (T) hinweg akustisch überwacht.

## Beschreibung

Die vorliegende Erfindung betrifft ein Verfahren zum Überwachen der Zubereitung von Milchschaum oder Heißmilch in einer Kaffeemaschine. Die Erfindung betrifft ferner eine Kaffeemaschine, die zur Durchführung dieses Verfahrens eingerichtet/programmiert ist.

Aus dem Stand der Technik ist es bekannt, in Kaffeemaschinen mithilfe eines akustischen Sensors milchverarbeitende Prozesse zum Zubereiten von Milchschaum sowie von Heißmilch auf verschiedene Qualitätsmerkmale wie Schaumkonsistenz, Temperatur, Kavitationsgeräusche und dergleichen zu überwachen. Auch kann das Auflaufverhalten des Milchschaums bzw. der Heißmilch in ein Gefäß akustisch überwacht werden. Auf diese Weise können Probleme beim Zubereitungsvorgang erkannt und gegebenenfalls geeignete Gegenmaßnahmen eingeleitet werden.

Ein derartiges Verfahren ist beispielsweise in der WO 2017/003 288 A1 beschrieben.

Als nachteilig an solchen herkömmlichen Verfahren erweist sich jedoch, dass die akustische Überwachung kontinuierlich über den gesamten Zubereitungszeitraum erfolgt. Dies bedeutet aber zum einen, dass auch temporäre Störgeräusche aufgezeichnet werden, welche die akustische Signatur der eigentlich zu überwachenden Prozessparameter überlagert, sodass die relevanten Messdaten zur Auswertung nur bedingt brauchbar oder sogar gänzlich unbrauchbar sind.

Unabhängig davon geht mit einer kontinuierlich akustischen Überwachung des Zubereitungsvorgangs die Erzeugung einer erheblichen Menge an Messdaten zur Weiterverarbeitung, Auswertung und auch Zwischenspeicherung einher. Dadurch erhöht sich der Aufwand für die akustische Überwachung, wodurch wiederum die Effizienz des Überwachungsvorgangs gemindert wird.

Es ist daher eine Aufgabe der vorliegenden Erfindung, ein verbessertes Verfahren um akustischen Erwachen der Zubereitung von Milchschaum oder Heißmilch in einer Kaffeemaschine zu schaffen, bei welcher voranstehend genannte Nachteile teilweise, idealerweise sogar vollständig, ausgeräumt sind.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Grundidee der vorliegenden Erfindung ist demnach, die Zubereitung von Milchschaum oder Heißmilch in einer Kaffeemaschine nicht über den gesamten Zubereitungszeitraum hinweg akustisch zu überwachen, sondern nur über einen Teil dieses Zubereitungszeitraums - im Folgenden als Teil-Zeitraum bezeichnet - hinweg. Auf diese Weise kann die Menge an aufzuzeichnenden Messdaten erheblich reduziert werden. Insbesondere ist es möglich, eine Aufzeichnung nur in denjenigen Phasen des Zubereitungszeitraums vorzunehmen, in welchem die Aufzeichnung von den Zubereitungsvorgang charakterisierenden Geräuschen nicht durch Störgeräusche beeinträchtigt oder gar verunmöglicht wird.

Den Zubereitungsvorgang charakterisierende Geräusche können beispielsweise Geräusche sein, die beim Aufschäumen - insbesondere beim Vermischen der Heißmilch mit Wasserdampf - sowie beim Erhitzen der Milch zu Heißmilch entstehen. Ebenso können besagte Geräusche Kavitationsgeräusche sein, die bei der Zubereitung der Heißmilch bzw. des Milchschaums entstehen. Solche Kavitationsgeräusche können insbesondere beim Verdampfen von Frischwasser zu Wasserdampf auftreten, welcher wiederum zum Erzeugen von Milchschaum mit der erhitzten Frischmilch vermischt wird. Auch Geräusche, die beim Mischen von Wasser bzw. Wasserdampf mit Heißmilch entstehen, können von der akustischen Überwachung umfasst sein. Schließlich können auch Geräusche überwacht werden, die beim Befüllen eines Gefäßes mit dem von der Kaffeemaschine erzeugten Milchschaum bzw. mit der von der Kaffeemaschine erzeugten Heißmilch entstehen. Schließlich können auch Geräusche akustisch überwacht werden, die entstehen, wenn Milch zur Zubereitung aus einem in der Kaffeemaschine oder extern vorgesehenen Milchreservoir angesaugt wird.

Besagte Störgeräusche, die den Zubereitungsvorgang nicht unmittelbar charakterisieren, können beispielsweise Betriebsgeräusche von bestimmten Komponenten - insbesondere einer Wasserpumpe - der Kaffeemaschine sein.

Das erfindungsgemäße Verfahren dient zum Überwachen der Zubereitung von Milchschaum oder Heißmilch in einer Kaffeemaschine. Hierbei erstreckt sich die Zubereitung bzw. der Zubereitungsvorgang über einen Zubereitungszeitraum hinweg, d. h. während des Zubereitungszeitraums wird der Milchschaum bzw. die Heißmilch zubereitet. Erfindungsgemäß umfasst der Zubereitungszeitraum wenigstens ein zeitliches Überwachungsintervall, in welchem die Zubereitung akustisch überwacht wird, und wenigstens ein zeitliches Nicht-Überwachungsintervall, in welchem die akustische Überwachung unterbrochen ist. Mit anderen Worten, die akustische Überwachung erfolgt nicht kontinuierlich über den gesamten Zubereitungszeitraum hinweg, sondern nur zeitweise bzw. abschnittsweise. Es existiert also wenigstens während des Zubereitungszeitraums wenigstens ein Zeitintervall, über welches hinweg keine akustische Überwachung der Zubereitung erfolgt.

Bei einer bevorzugten Ausführungsform des erfindungsgemäßen Verfahrens werden in dem Nicht-Überwachungsintervall von der Kaffeemaschine Störgeräusche erzeugt. Somit wird beim erfindungsgemäßen Verfahren ausgeschlossen, dass von der Kaffeemaschine erzeugte Störgeräusche die akustische Überwachung negativ beeinflussen können.

Gemäß einer vorteilhaften Weiterbildung werden die Störgeräusche periodisch von einer in einem eingeschalteten Zustand getaktet arbeitenden Wasserpumpe der Kaffeemaschine zum Fördern von Frischwasser erzeugt.

Besonders bevorzugt können die periodischen Störgeräusche unmittelbar nach dem Einschalten der Kaffeemaschine in einem sogenannten Einschwingzeitraum auftreten, in welchem die periodischen Störgeräusche auftreten und an welchen sich zeitlich ein Betriebszeitraum anschließt, in welchem die Wasserpumpe keine Störgeräusche mehr erzeugt. Somit kann nach sich an den Einschwingvorgang eine kontinuierliche Überwachung in Form eines quasi "dauerhaften" Überwachungsintervalls anschließen, in welchem die Zubereitung durchgehend akustisch überwacht wird. Der Einschwingvorgang hingegen kann dem Erfindungsgedanken folgend in mehrere aufeinanderfolgende Überwachungsintervalle und Nicht-Überwachungsintervalle unterteilt werden, in welchen die akustische Überwachung stattfindet bzw. unterbrochen wird.

Besonders bevorzugt kann auch während eines Ausgebens des Milchschaums bzw. der Heißmilch eine akustische Überwachung stattfinden und somit die Zubereitung des Milchschaums bzw. der Heißmilch überwacht werden.

Bei einer bevorzugten Ausführungsform umfasst die akustische Überwachung eine Aufzeichnung von Geräuschen mittels einer akustischen Sensoreinrichtung der Kaffeemaschine, welche im Zuge des Zubereitungsvorgangs charakteristisch für die Zubereitung des Milchschaums bzw. der Heißmilch sind. Den Zubereitungsvorgang charakterisierende Geräusche können beispielsweise Geräusche sein, die beim Aufschäumen - insbesondere beim Vermischen von Heißmilch mit Wasserdampf - sowie beim Erhitzen der Milch zu Heißmilch entstehen. Ebenso können besagte Geräusche Kavitationsgeräusche sein, die bei der Zubereitung der Heißmilch bzw. des Milchschaums auftreten. Solche Kavitationsgeräusche können insbesondere beim Verdampfen von Frischwasser zu Wasserdampf auftreten, welcher zum Erzeugen von Milchschaum mit der erhitzten Frischmilch vermischt werden soll. Auch können Geräusche, die beim Mischen von Wasser bzw. Wasserdampf mit Milch entstehen, sind umfasst. können auch Geräusche überwacht werden, die beim Befüllen eines Gefäßes mit dem von der Kaffeemaschine erzeugten Milchschaum bzw. mit der von der Kaffeemaschine erzeugten Heißmilch auftreten. Schließlich können Geräusche überwacht werden, die entstehen, wenn Milch zur Zubereitung aus einem in der Kaffeemaschine oder extern vorgesehenen Milchreservoir angesaugt wird.

Besonders bevorzugt können die aufgezeichneten Geräusche ausgewertet und insbesondere mit hinterlegten Referenzdaten bzw. Referenzgeräuschen verglichen werden.

Zur Auswertung kann ein Kl-Modell, insbesondere eines der folgenden KI-Modelle zum Einsatz kommen: Recurrent Neuronal Networks (RNN), Long Short Term Memory (LSTM), Autoencoder, Variational Autoencoder (VAE), Convolutional Neuronal Networks (CNN), Random Forest, Ada Boost, Explainable Boosting Machine (EBM).

Gemäß einer vorteilhaften Weiterbildung des erfindungsgemäßen Verfahrens kann der Zubereitungsvorgang in Abhängigkeit vom Ergebnis der Auswertung angepasst, insbesondere geregelt werden. Insbesondere kann der Zubereitungsvorgang abgebrochen werden, wenn die Auswertung der aufgezählten Geräusche gibt, dass diese zu stark vom besagten Referenzgeräuschen bzw. -daten abweichen.

Besonders bevorzugt kann vorgesehen sein, dass während bestimmter Ereignisse oder Ereigniszeiträume der Zubereitung bzw. des Zubereitungsvorgangs keine akustische Überwachung stattfindet, wenn während dieser Ereignisse bzw. Ereigniszeiträume die Überwachung störende Störgeräusche erzeugt werden. Dies ist beispielsweise der Fall, wenn Frischwasser mit einer elektrischen Heizeinrichtung beheizt wird. Besonders bevorzugt kann daher vorgesehen werden, in den genannten Zeitintervallen keine akustische Überwachung durchzuführen.

Bei einer weiteren bevorzugten Variante kann eine zeitliche Festlegung des Überwachungsintervalls und des Nicht-Überwachungsintervalls vor Beginn des Zubereitungsvorgangs erfolgen. Diese Variante erweist sich als vorteilhaft, wenn für die zu erfolgende Zubereitung bereits vor Beginn der Zubereitung bekannt ist, in welchen Zeitabschnitten des Zubereitungsvorgangs Störgeräusche auftreten können oder auftreten werden.

Gemäß einer weiteren vorteilhaften Weiterbildung des erfindungsgemäßen Verfahrens kann die zeitliche Festlegung wenigstens eines Überwachungsintervalls oder/und Nicht-Überwachungsintervalls dynamisch während des Zubereitungsvorgangs zeitlich festgelegt, insbesondere angepasst, werden.

Besonders bevorzugt kann sich der Zubereitungszeitraum aus einer Mehrzahl von abwechselnd aufeinander folgenden Überwachungsintervallen und Nicht-Überwachungsintervallen zusammensetzen. Insbesondere können sich die Überwachungsintervalle und die Nicht-Überwachungsintervall periodisch abwechseln, sodass besonders bevorzugt eine getaktete akustische Überwachung der Zubereitung realisiert wird.

Die Erfindung betrifft weiterhin eine Kaffeemaschine, insbesondere einen Kaffeevollautomaten, zur Zubereitung eines Milchschaums oder Heißmilch enthaltenden Kaffee-Heißgetränks. Die Kaffeemaschine umfasst ein Mahlwerk zum Mahlen von Kaffeebohnen zu Kaffeepulver. Des Weiteren umfasst die Kaffeemaschine eine Brüheinheit zum Aufbrühen des Kaffee-Heißgetränks aus dem mittels des Mahlwerks zubereiteten Kaffeepulver und aus Heißwasser. Besagtes Heißwasser kann aus einem Wassertank der Kaffeemaschine zum Speichern von Frischwasser entnommen werden und mittels einer elektrischen Heizeinrichtung, die Teil der Brüheinheit sein kann oder aber dieser vorgeschaltet sein kann, erhitzt werden. Des Weiteren umfasst die Kaffeemaschine eine Milchverarbeitungseinrichtung zum Zubereiten von Milchschaum oder Heißmilch aus Frischmilch. Mittels der Milchverarbeitungseinrichtung können Milch, Luft und Wasserdampf in einem bestimmten Verhältnis miteinander vermischt werden, um auf diese Weise den gewünschten Milchschaum bzw. die gewünschte Heißmilch zu erhalten.

Ferner umfasst die erfindungsgemäße Kaffeemaschine eine akustische Sensoreinrichtung, insbesondere zum akustischen Überwachen der Zubereitung des Milchschaums bzw. der Heißmilch. Die akustische Sensoreinrichtung kann ein Mikrofon zur Detektion von Luftschall sein oder umfassen. Dadurch können im Betrieb der Milchverarbeitungseinrichtung von dieser während des Zubereitungsvorgangs erzeugte Geräusche zur Auswertung ausgezeichnet werden.

Des Weiteren umfasst die Kaffeemaschine eine mit der akustischen Sensoreinrichtung zusammenwirkenden Steuerungs-/Regelungseinrichtung, die zur Durchführung des voranstehend vorgestellten, erfindungsgemäßen Verfahrens eingerichtet/programmiert ist. Die voranstehend erläuterten Vorteile des erfindungsgemäßen Verfahren übertragen sich daher auf die erfindungsgemäße Kaffeemaschine. Die Steuerungs-/Regelungseinrichtung kann bevorzugt eine Auswertungseinrichtung umfassen, mittels welcher der von der Sensoreinrichtung aufgezeichnete und an die Steuerungs-/Regelungseinrichtung übertragenen Messdaten ausgewertet werden können.

Bei einer bevorzugten Ausführungsform der erfindungsgemäßen Kaffeemaschine ist eine Richtcharakteristik der akustischen Sensoreinrichtung auf die Milchverarbeitungseinrichtung gerichtet. Auf diese Weise ist sichergestellt, dass die für die Überwachung relevanten Geräusche mit hoher Empfindlichkeit aufgezeichnet und gleichzeitig für die Überwachung nicht relevante Störgeräusche wirksam unterdrückt werden können.

Gemäß einer vorteilhaften Weiterbildung kann die Steuerungs-/Regelungseinrichtung eine Leiterplatte umfasst, auf welcher elektronische Bauelemente angeordnet sind. Bei dieser Weiterbildung ist die akustische Sensoreinrichtung bzw. das Mikrofon auf der Leiterplatte angeordnet. Diese Variante lässt sich mit besonders geringem technischem Aufwand umsetzen, da die erforderliche Kommunikationsverbindung zwischen Sensoreinrichtung und Auswertungseinrichtung auf der einen Teil der Steuerungs-/Regelungseinrichtung bildenden Leiterplatte angeordnet ist. Damit einher gehen beträchtliche Kostenvorteile bei der Herstellung der Kaffeemaschine.

Die Kaffeemaschine kann zum Ausgeben des Milchschaums eingerichtet sein. Insbesondere kann dies mittels eines Auslasses erfolgen. Gleichermaßen kann ein Verfahrensschritt vorgesehen sein, in dem ein Ausgeben des Milchschaums erfolgt. Dadurch muss nicht, wie z.B. bei einer Milchschaumerzeugung mittels einer Dampflanze eine bereits passende Menge an Milch in eine Tasse oder ein Milchkännchen eingefüllt werden, sondern es kann direkt fertiger Milchschaum ausgegeben werden. Insbesondere kann dabei das Ausgeben des Milchschaumes Schritt der Zubereitung überwacht werden, z.B. im Hinblick auf verschiedene Qualitätsmerkmale wie eine Schaumkonsistenz, eine Milchschaum-Ausgabetemperatur, Kavitationsgeräusche des Prozesses, ein Auslaufverhalten in eine Tasse (Beispielsweise dahingehend, ob Strömungsabrisse auftreten), oder auch ob überhaupt Milch angesaugt wird. Dadurch können insbesondere Maßnahmen oder Schritte zu einer Optimierung des Ausgebens ermittelt und eingeleitet werden.

Bei einer anderen vorteilhaften Weiterbildung ist die akustische Sensoreinrichtung im Bereich eines Auslasses der Kaffeemaschine zum Ausgeben des Milchschaums bzw. der Heißmilch angeordnet. Bei dieser Weiterbildung können im Bereich des Auslasses erzeugte Geräusche besonders präzise aufgezeichnet und ein negativer Einfluss von die Aufzeichnung beeinträchtigenden Störgeräuschen klein gehalten werden. Ein weiterer Auslass kann zum Ausgeben des in der Brühkammer aufgebrühten diese Kaffee-Heißgetränks vorgesehen sein. Gemäß einer Alternativvariante kann aber auch ein gemeiner Auslass zum Ausgeben des Milchschaums bzw. der Heißmilch als auch des aufgebrühten Kaffee-Heißgetränks vorgesehen sein.

Die Erfindung betrifft weiterhin ein Computerprogramm[produkt], umfassend Befehle, die die bei der Ausführung des Programms durch eine Steuerungs-/Regelungseinrichtung, insbesondere die der vorhergehend beschriebenen Kaffeemaschine, die Steuerungs-/Regelungseinrichtung veranlassen, die Schritte des hier beschriebenen Verfahrens durchzuführen, d.h. des erfindungsgemäßen Verfahrens, ggf. auch mit den entsprechenden Weiterbildungen. Dadurch können die vorhergehend genannten Vorteile auch an bereits Produzierten oder sogar bereits verkauften Kaffeemaschinen genutzt werden. Es können dadurch beispielsweise auch bereits ausgelieferte Kaffeemaschinen mit entsprechenden Einrichtungen jedoch ohne entsprechender Programmierung sehr einfach verbessert werden, indem z.B. über ein Firmware-Update oder eine entsprechende App mittels einer Internetverbindung entsprechende Befehle vorgesehen werden. Dadurch kann auch eine besonders nachhaltige Lösung der eingangs genannten Aufgabe bereitgestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
Fig. 1 beispielhaft den Aufbau einer erfindungsgemäßen Kaffeemaschine,
Fig. 2 ein das erfindungsgemäße Verfahren beispielhaft erläuterndes Diagramm,
Fig. 3 eine die Unterteilung des Zubereitungsvorgangs in Überwachungsintervalle und Nicht-Überwachungsintervalle illustrierende Darstellung.

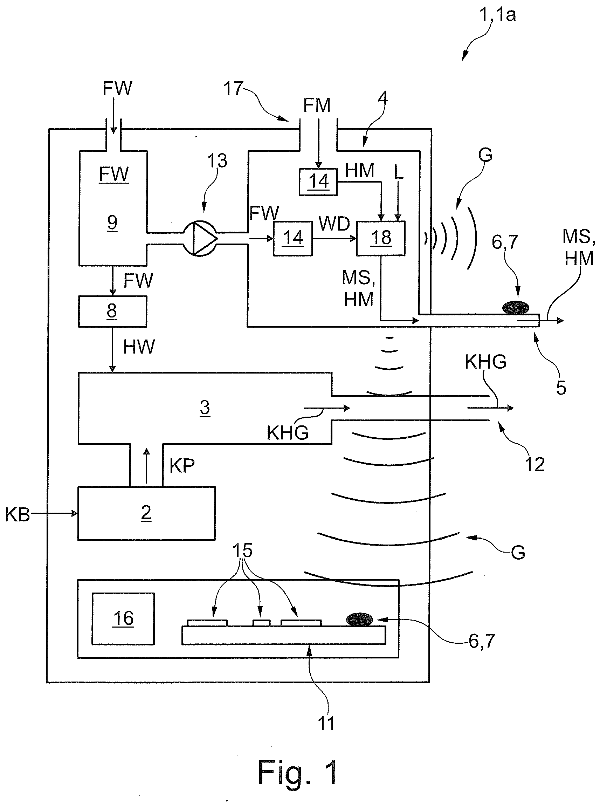

Die Figur 1 zeigt in schematischer Darstellung den Aufbau einer erfindungsgemäßen Kaffeemaschine 1 zur Zubereitung von Milchschaum MS oder Heißmilch HM enthaltenden Kaffee-Heißgetränks KHG. Die Kaffeemaschine 1 kann als Kaffeevollautomat 1a ausgebildet sein.

Die Kaffeemaschine 1 umfasst ein Mahlwerk 2 zum Mahlen von Kaffeebohnen KB zu Kaffeepulver KP. Des Weiteren umfasst die Kaffeemaschine eine Brüheinheit 3 zum Aufbrühen und Zubereiten des Kaffeeheißgetränks KHG aus dem mittels des Mahlwerks 2 zubereiteten Kaffeepulvers KP und aus der Kaffeemaschine 1 erzeugtem Heißwasser HW. Besagtes Heißwasser HW kann aus einem Wassertank 9 der Kaffeemaschine 1 entnommen werden und mittels einer elektrischen Heizeinrichtung 8 erhitzt werden, die Teil der Brüheinheit 3 sein kann oder aber, alternativ dazu, dieser vorgeschaltet sein kann.

Des Weiteren umfasst die Kaffeemaschine 1 eine Milchverarbeitungseinrichtung 4 zum Zubereiten von Milchschaum MS oder von Heißmilch HM aus Frischmilch FM. Außerdem kann die Kaffeemaschine 1 einen Auslass 5 zum Ausgeben des in der Milchverarbeitungseinrichtung 4 zubereiteten Milchschaums MS bzw. der in der Milchverarbeitungseinrichtung 4 zubereiteten Heißmilch HM aufweisen.

Über einen Milcheinlass 17 kann die Frischmilch FM von außen in die Milchverarbeitungseinrichtung 4 eingebracht werden. Die Milchverarbeitungseinrichtung 4 umfasst eine elektrische Heizeinrichtung 14 zum Erhitzen der zugeführten Frischmilch FM zu Heißmilch HM. Diese Heißmilch HM kann über den Auslass 5 ausgegeben werden. Soll keine Heißmilch HM, sondern Milchschaum MS erzeugt werden, so kann hierzu mittels der Heizeinrichtung 14 Frischwasser WF, welches mittels einer Wasserpumpe 13 aus dem Wassertank 9 in die Milchverarbeitungseinrichtung 4 gefördert wird, zu Wasserdampf WD verdampft werden. Dieser Wasserdampf WD wird dann einer Durchmischungskammer 18 der Milchverarbeitungseinrichtung 4 mit der Heißmilch HM und mit Luft L vermischt und auf diese Weise der gewünschte Milchschaum MS zubereitet. Auch der Milchschaum MS kann dann über den Auslass 5 aus der Kaffeemaschine 1 ausgegeben werden. Mittels der Milchverarbeitungseinrichtung 4 können die Heißmilch HM, der Wasserdampf WD und Luft L in einem vorgegebenen Verhältnis miteinander vermischt werden, um den gewünschten Milchschaum MS bzw. die gewünschte Heißmilch HM zu erzeugen.

Ein weiterer Auslass 12 kann zum Ausgeben des in der Brühkammer 3 aufgebrühten und zubereiteten Kaffee-Heißgetränk KHG vorgesehen sein. In einer Variante kann aber ein gemeiner auch ein gemeinsamer Auslass zum Ausgeben des Milchschaums bzw. der Heißmilch als auch des zubereiteten Kaffee-Heißgetränk vorgesehen sein (in Figur 1 nicht gezeigt).

Des Weiteren umfasst die Kaffeemaschine 1 eine akustische Sensoreinrichtung 6 zum akustischen Überwachen der Zubereitung des Milchschaums MS bzw. der Heißmilch HM. Die akustische Sensoreinrichtung 6 umfasst ein Mikrophon 7 zur Detektion von Luftschall, dessen Richtcharakteristik auf die Milchverarbeitungseinrichtung 4 ausgerichtet ist. Somit können von der Milchverarbeitungseinrichtung 4 während des Zubereitungsvorgangs ZV erzeugte Geräusche detektiert und aufgezeichnet werden.

Die akustische Sensoreinrichtung 6 kann wie gezeigt im Bereich des Auslasses 5 angeordnet sein. Somit können im Bereich des Auslasses 5 auftretende Geräusche G besonders präzise aufgezeichnet werden.

Des Weiteren umfasst die Kaffeemaschine 1 eine mit der akustischen Sensoreinrichtung 6 zusammenwirkenden Steuerungs-/Regelungseinrichtung 10, die zur Durchführung des erfindungsgemäßen Verfahrens eingerichtet und programmiert ist. Die Steuerungs-/Regelungseinrichtung 10 kann datenübertragend mit der Sensoreinrichtung 6 verbunden sein, sodass von der Sensoreinrichtung 6 erzeugte Messdaten zur Weiterverarbeitung und Auswertung an die Steuerungs-/Regelungseinrichtung 10 übertragen werden können. Hierzu kann die Steuerungs-/Regelungseinrichtung 10 eine Auswertungseinrichtung 15 aufweisen, mittels welcher der von der Sensoreinrichtung 6 aufgezeichnet und an die Steuerungs-/Regelungseinrichtung 10 übertragenen Messdaten ausgewertet werden können. Die Steuerungs-/Regelungseinrichtung 10 kann eine Leiterplatte 11 umfassen, auf welcher elektronische Bauelemente 16 angeordnet sind.

Alternativ oder zusätzlich zur voranstehend vorgeschlagenen Anordnung der Sensoreinrichtung 6 am Auslass 5 kann die akustische Sensoreinrichtung 6 bzw. das Mikrofon 7 - wie in Figur 1 ebenfalls angedeutet - auch auf der Leiterplatte 11 der Steuerungs-/Regelungseinrichtung 10 angeordnet sein.

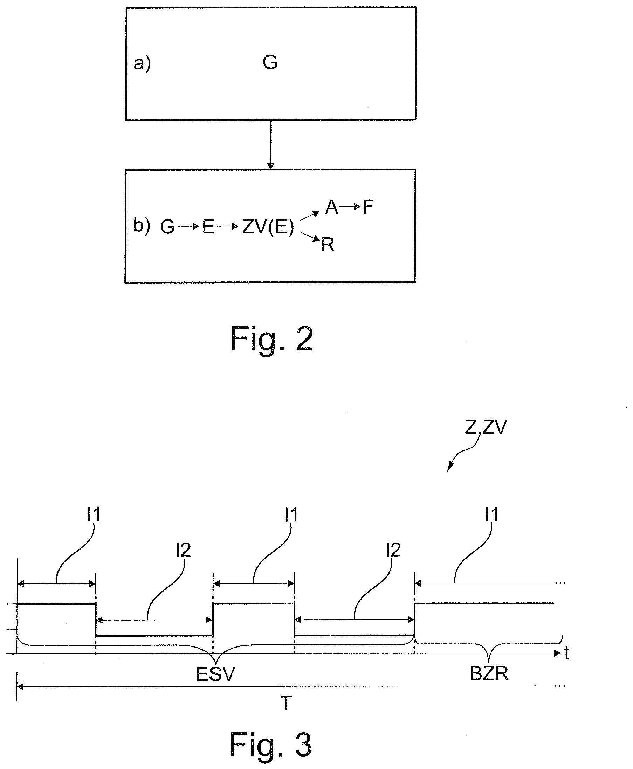

Im Folgenden wird anhand Ablaufdiagramms der Figur 2 und des zeitlichen Diagramms der Figur 3 das erfindungsgemäße Verfahren beispielhaft erläutert.

Das Verfahren dient zum Überwachen der Zubereitung von Milchschaum MS sowie HM Heißmilch in einer Kaffeemaschine 1. Hierbei erstreckt sich die Zubereitung Z bzw. der Zubereitungsvorgang ZV gemäß Figur 3 über einen Zubereitungszeitraum T hinweg, über welchen hinweg der Milchschaum MS bzw. die Heißmilch HM in der Milchverarbeitungseinrichtung 4 zubereitet wird.

Beim erfindungsgemäßen Verfahren wird besagte Zubereitung Z im Zuge einer ersten Maßnahme a) des Verfahrens nur über einen Teilzeitraum des gesamten Zubereitungszeitraums T hinweg akustisch überwacht. Mit anderen Worten, die akustische Überwachung erfolgt nicht kontinuierlich über den gesamten Zubereitungszeitraum T hinweg, sondern nur zeitweise bzw. zeitabschnittsweise.

Die akustische Überwachung der Zubereitung Z bzw. des Zubereitungsvorgangs ZV umfasst eine Aufzeichnung von Geräuschen G (vgl. Figur 1) mittels der akustischen Sensoreinrichtung 6 bzw. mittels des Mikrofons 7 der Kaffeemaschine 1. Diese Geräusche G können im Zuge von Maßnahme a) in Form von Messdaten an die Steuerungs-/Regelungseinrichtung 10 bzw. an die Auswertungseinrichtung 16 übertragen werden. Diese Messdaten M geben Schall bzw. Schallwellen wieder, welche bzw. welche im Zuge der Zubereitung Z bzw. des Zubereitungsvorgangs ZV erzeugt und von der Sensoreinrichtung 6 bzw. Mikrofon 7 aufgezeichnet wurden. Auf diese Weise können verschiedene Prozessparameter des Zubereitungsvorgangs ZV überwacht werden, da diese von den Prozessparametern abhängen.

Im Zuge einer zweiten Maßnahme b) des erfindungsgemäßen Verfahrens werden die aufgezeichneten Geräusche G ausgewertet. Die Zubereitung Z bzw. der Zubereitungsvorgang ZV kann dann in Abhängigkeit vom Ergebnis E dieser Auswertung angepasst werden, also ZV = ZV(E).

Insbesondere kann auf diese Weise eine Regelung R des Zubereitungsvorgangs ZV ausgeführt werden, bei welcher wenigstens ein Prozessparameter des Zubereitungsvorgangs ZV wie beispielsweise die Einstellung der Temperatur beim Erhitzen der Frischmilch FM zu Heißmilch HM oder beim Verdampfen des Frischwassers FW zu Wasserdampf WD geregelt wird.

Denkbar ist außerdem, dass der Zubereitungsvorgang ZV abgebrochen wird, wenn die aufgezeichneten Geräusche G zu stark von den hinterlegten Referenzgeräuschen abweichen. Im Falle eines solchen Abbruchs A ist es optional auch denkbar, ein Fehlersignal F zu erzeugen.

Dem Diagramm der Figur 3 lässt entnehmen, dass sich der Zubereitungszeitraum T aus mehreren abwechselnd aufeinander folgenden Überwachungsintervallen I1 und die Nicht-Überwachungsintervallen I2 zusammensetzt. Bevorzugt können wie im Diagramm der Figur 3 gezeigt Überwachungsintervalle I1 und die Nicht-Überwachungsintervall I2 periodisch aufeinander folgen. Auf diese Weise kann eine vorteilhafte getaktete akustische Überwachung des Zubereitungsvorgangs ZV realisiert werden. Die Abfolge der Überwachungsintervalle I1 und der Nicht-Überwachungsintervalle I2 kann so festgelegt werden, dass von der Kaffeemaschine nur in den Nicht-Überwachungsintervallen I2 Störgeräusche erzeugt werden, in den Überwachungsintervallen I1 hingegen nicht. Dadurch kann ausgeschlossen werden, dass von der Kaffeemaschine 1 erzeugte Störgeräusche die akustische Überwachung der Zubereitung Z negativ beeinflussen können.

Dies erweist sich insbesondere als vorteilhaft, wenn besagte Störgeräusche periodisch von der in einem eingeschalteten Zustand getaktet arbeitenden Wasserpumpe 13 der Kaffeemaschine 1 (vgl. Figur 1) zum Fördern von Frischwasser FW erzeugt werden.

Von der Wasserpumpe 13 periodisch erzeugte Störgeräusche können insbesondere unmittelbar nach dem Einschalten der Kaffeemaschine 1 in einem sogenannten Einschwingzeitraum ESV auftreten, in welchem die periodischen Störgeräusche auftreten und an welchen sich zeitlich ein Betriebszeitraum BZR anschließt, in welchem die Wasserpumpe 13 keine Störgeräusche erzeugt. Somit kann nach sich an den Einschwingvorgang eine kontinuierliche Überwachung in Form eines quasi "dauerhaften" Überwachungsintervalls I1 (vgl. Figur 3) anschließen, in welchem die Zubereitung unterbrechungsfrei akustisch überwacht weren kann.

Der Einschwingvorgang ESV kann wie in Figur 3 gezeigt in mehrere aufeinanderfolgende Überwachungsintervalle I1 und Nicht-Überwachungsintervalle I2 unterteilt werden, in welchen die akustische Überwachung stattfindet bzw. unterbrochen wird. In den Nicht-Überwachungsintervallen I2 erzeugt die Wasserpumpe 13 Störgeräusche, in den Überwachungsintervallen I1 ist dies nicht der Fall.

In einem weiteren Beispiel (nicht gezeigt) auch während eines Ausgebens des Milchschaums MS bzw. der Heißmilch HM eine akustische Überwachung stattfinden und dadurch die Zubereitung des Milchschaums MS bzw. der Heißmilch HV überwacht werden. Während des Ausgebens des Milchschaums MS bzw. der Heißmilch HM wird also ein Überwachungsintervall I1 festgelegt,

### Bezugszeichenliste

- 1: Kaffeemaschine
- 1a: Kaffeevollautomat
- 2: Mahlwerk
- 3: Brüheinheit
- 4: Milchverarbeitungseinrichtung
- 5: Auslass
- 6: akustische Sensoreinrichtung
- 7: Mikrofon
- 8: elektrische Heizeinrichtung
- 9: Wassertank
- 10: Steuerungs-/Regelungseinrichtung
- 11: Leiterplatte
- 12: weiterer Auslass
- 13: Wasserpumpe
- 14: Heizeinrichtung
- 15: Auswertungseinrichtung
- 16: elektronische Bauelemente
- 17: Milcheinlass
- 18: Durchmischungskammer

- Z: Zubereitung
- ZV: Zubereitungsvorgang
- FW: Frischwasser
- FM: Frischmilch
- WD: Wasserdampf
- HM: Heißmilch
- MS: Milchschaum
- L: Luft
- KP: Kaffeepulver
- KB: Kaffeebohnen

- G: Geräusche
- E: Ergebnis
- R: Regelung
- A: Abbruch
- F: Fehlersignal

- T: Zubereitungszeitraum
- T-ZR: Teil-Zeitraum
- I1: Überwachungsintervall
- I2: Nicht-Überwachungsintervall

## Patentansprüche

1. Verfahren zum Überwachen einer Zubereitung (Z) von Milchschaum (MS) oder Heißmilch (HM) in einer Kaffeemaschine (1), wobei sich die Zubereitung (Z) über einen Zubereitungszeitraum (T) hinweg erstreckt,
gemäß welchem der Zubereitungszeitraum (T) wenigstens ein zeitliches Überwachungsintervall (I1), in welchem die Zubereitung akustisch überwacht wird, und wenigstens ein zeitliches Nicht-Überwachungsintervall (I2) umfasst, in welchem die akustische Überwachung unterbrochen ist.

2. Verfahren nach Anspruch 1,
**dadurch gekennzeichnet, dass**
in dem Nicht-Überwachungsintervall (I2) von der Kaffeemaschine Störgeräusche erzeugt werden.

3. Verfahren nach Anspruch 2,
**dadurch gekennzeichnet, dass**
die Störgeräusche periodisch von einer in einem eingeschalteten Zustand getaktet arbeitenden Wasserpumpe der Kaffeemaschine (1) zum Fördern von Frischwasser erzeugt werden.

4. Verfahren nach Anspruch 3,
**dadurch gekennzeichnet, dass**
die Wasserpumpe unmittelbar nach dem Einschalten einen Einschwingzeitraum aufweist, in welchem die periodischen Störgeräusche auftreten und an welchen sich zeitlich ein Betriebszeitraum anschließt, in welchem die Wasserpumpe keine Störgeräusche erzeugt.

5. Verfahren nach einem der vorhergehenden Ansprüche,
**dadurch gekennzeichnet, dass**
während eines Ausgebens des Milchschaums bzw. der Heißmilch eine akustische Überwachung stattfindet.

6. Verfahren nach einem der vorhergehenden Ansprüche
**dadurch gekennzeichnet, dass**
die in dem Überwachungsintervall (I1) aufgezeichneten Geräusche (G) ausgewertet werden und insbesondere mit hinterlegten Referenzgeräuschen bzw. Referenzdaten abgeglichen wird.

7. Kaffeemaschine (1), insbesondere Kaffeevollautomat (1a), zur Zubereitung eines Milchschaums (MS) oder Heißmilch (HM) enthaltenden Kaffee-Heißgetränks (KHG),
- mit einem Mahlwerk (2) zum Mahlen von Kaffeebohnen (KB) zu Kaffeepulver (KP),
- mit einer Brüheinheit (3) zum Zubereiten des Kaffeeheißgetränks (KHG) aus dem Kaffeepulver (KP) und aus Heißwasser (HW),
- mit einer Milchverarbeitungseinrichtung (4) zum Zubereitung von Milchschaum (MS) oder Heißmilch (HM) aus Frischmilch (FM),
- mit einer akustischen Sensoreinrichtung (6), insbesondere einem Mikrofon (7), zum akustischen Überwachen der Zubereitung des Milchschaums (MS) bzw. der Heißmilch (HM),
- mit einer mit der akustischen Sensoreinrichtung (6) zusammenwirkenden Steuerungs-/Regelungseinrichtung (10), die zur Durchführung des Verfahrens nach einem der vorhergehenden Ansprüche eingerichtet/programmiert ist.

8. Kaffeemaschine nach Anspruch 17,
**dadurch gekennzeichnet, dass**
eine Richtcharakteristik der akustischen Sensoreinrichtung (6) auf die Milchverarbeitungseinrichtung (4) gerichtet ist.

9. Kaffeemaschine nach Anspruch 7 oder 8,
**dadurch gekennzeichnet, dass**
- die Steuerungs-/Regelungseinrichtung (10) eine Leiterplatte (11) umfasst, auf welcher elektronische Bauelemente (16) angeordnet sind;
- die akustische Sensoreinrichtung (6) auf der Leiterplatte (11) angeordnet ist.

10. Kaffeemaschine nach einem der Ansprüche 7 bis 9,
**dadurch gekennzeichnet, dass**
die akustische Sensoreinrichtung (6) im Bereich eines Auslasses (5) der Kaffeemaschine (1) zum Ausgeben des Milchschaums (MS) bzw. der Heißmilch (HM) angeordnet ist.

11. Computerprogramm[produkt], umfassend Befehle, die bei der Ausführung des Programms durch eine Steuerungs-/Regelungseinrichtung (10), insbesondere die einer Kaffeemaschine (1) einem der Ansprüche 7 bis 10, die Steuerungs-/Regelungseinrichtung (10) veranlassen, die Schritte des Verfahrens gemäß einem der Ansprüche 1 bis 6 durchzuführen.
